# EUROPEAN PATENT SPECIFICATION

(11) **EP 0 427 268 B1**
(45) Date of publication and mention of the grant of the patent: **15.11.1995**
(21) Application number: 90121418.9
(22) Date of filing: 08.11.1990
(51) Int. Cl.: C08L 77/00, C08L 51/04

(54) **Thermoplastic compositions based on vinyl-aromatic copolymers and polyamide resins**
Thermoplastische Zusammensetzungen basierend auf vinylaromatischen Copolymeren und Polyamid-Harzmassen
Compositions thermoplastiques à base de copolymères vinylaromatiques et de résines de polyamide

(30) Priority: 09.11.1989 IT 2232489
(43) Date of publication of application: 15.05.1991
(73) Proprietor: ENICHEM S.p.A., 20124 Milano (IT)
(72) Inventor: Fasulo, Gian Claudio, Dr. Chem., I-46010 San S. Di Curtatone, Mantova (IT); Ghidoni, Dario, Dr. Chem., I-46023 Gonzaga, Mantova (IT); Cigna, Giuseppe, Dr. Chem., I-46100 Mantova (IT); Rossi, Anna Grazia, Dr. Chem., I-46100 Mantova (IT); Borghi, Italo, Dr., I-44100 Ferrara (IT)
(74) Representative: Weinhold, Peter, Dr.

(56) References cited:
- EP-A- 220 155
- EP-A- 261 748
- EP-A- 0 319 056
- GB-A- 2 226 035
- US-A- 3 642 950

## Description

The present invention relates to thermoplastic compositions based on vinyl-aromatic copolymers and polyamide resins.

More particularly, the present invention relates to thermoplastic compositions based on impact-resistant styrenic copolymers and polyamides having improved mechanical properties, such as impact strength and temperature resistance. Said properties are particularly suitable for injection molding and thermoforming.

As is known, impact-resistant vinyl-aromatic copolymers may be obtained by bulk or bulk-suspension polymerisation of olefinic rubber solutions, such as ethylene-propylene (EPM) or ethylene-propylene-non-conjugated diene (EPDM) rubber solutions, in a vinyl-aromatic monomer, as such or blended with other polymerizable ethylenically unsaturated monomers.

Styrene-acrylonitrile copolymers grafted onto olefinic rubbers (AES) show a very good impact resistance but their low thermoresistance renders them unsuitable for particular applications, e.g. applications where temperatures of from 120 to 160°C are used or the manufacture of products which come into contact with parts heated at such temperatures.

It is known that this lacking Property of AES copolymers can be overcome by blending them with other polymers having a high thermoresistance such as, for example, polyamides. In fact, such resins show a good elongation, high energy absorption, especially in ball drop tests, and a very good thermoresistance. The high notch sensitivity and water absorption, however, constitute a significant limitation to the use of these resins. Moreover, polyamides are rarely compatible with impact-resistant vinyl-aromatic copolymers and, therefore, the interfaces between the domains of the blend components represent weak areas along which the breaking of the material can take place.

In order to make polyamides compatible with impact-resistant vinyl-aromatic copolymers, DE-A-3 120 803 proposes to use a compatibilizer composed of a styrene copolymer containing from 2 to 50% by weight of reactive carboxylic acid and/or anhydride groups. The compatibilizing copolymer described in said document has a molecular weight between 500 and 20,000, in particular between 500 and 7,000, and preferably between 800 and 2,000.

The thus obtained mixtures having improved impact strength (IZOD) properties are still not satisfactory for several applications.

According to EP-A-202 214 the impact strength of polyamide compositions can be improved by preparing a blend containing:
a) 5 to 79.5 % by weight of a composition grafted on rubber consisting of grafted copolymer of 15 to 85 % by weight of at least one monomer selected from C₁₋₄ alkyl methacrylates, C₁₋₄ alkyl acrylates, methacrylonitrile and acrylonitrile and of 85 to 15 % by weight of vinyl-aromatic monomer, wherein the monomers were polymerized in the presence of, and grafted onto a rubber substrate having a glass transition temperature below 0°C, the percentage by weight of rubber being from 5 to 80 % and the percentage by weight of grafted copolymer being from 95 to 20 %;
b) 94.5 to 20 % by weight of a polyamide, and
c) 0.5 to 60 % by weight of a compatibilizing copolymer comprising a copolymerized, functionalized monomer capable of reacting with the polyamide, the functionalized monomer concentration ranging from 0.05 to 4 % by moles of the copolymer.

Also the so obtained compositions do not show an optimum combination of properties for all of the required applications.

In particular, an increase in impact strength can be achieved by using an excess of impact-resistant vinylaromatic polymer with respect to the polyamide resin. This increase, however, is accompanied by a decrease in thermoresistance. Therefore, the obtained products cannot be processed at temperatures above 120 to 140°C. On the other hand, by increasing the polyamide resin content, the thermoresistance of the compositions is increased. This, however, is achieved at the expense of the impact strength.

EP-A-220 155 discloses a polyamide composition of improved impact resistance comprising a blend of components (A) a graft polymer of a (meth)-acrylate and/or (meth)-acrylonitrile and a vinylaromatic monomer grafted onto a substrate rubber, (B) a poly-amide resin, (C) an acid-containing acrylate copolymer rubber and (D) an effective amount of an acid-containing polymer to improve the impact resistance of the polymer blend.

EP-A-261 748 is directed to an impact resistant polymeric composition comprising:
component (a) in the range of from 1 to 95 per cent by weight of a polyamide having a number average molecular weight of at least 5,000;
component (b) in the range of from 1 to 95 per cent by weight of a polyolefin, and
component (c) in the range of from 1 to 50 per cent by weight of an elastomer,
component (b) and/or component (c) being grafted with an acid compound or a derivative of an acid compound, the sum of the percentages of components (a), (b) and (c) being 100.

It has now been found that the addition of polyolefin to thermoplastic compositions of impact-resistant vinyl-aromatic copolymer and polyamide resin results in an optimum combination of the properties of said compositions, making them suitable for use in all those fields where high impact strength and high thermoresistance are required.

Therefore the present invention provides thermoplastic compositions having an optimum balance of mechanical, thermal and rheological properties, comprising a blend of:
(A) an impact-resistant vinyl-aromatic copolymer containing from 5 to 40% by weight of ethylenically unsaturated nitrile, from 15 to 50% by weight of olefinic elastomer formed from at least two different alpha-mono-olefins and a copolymerizable polyene monomer and from 10 to 80% by weight of vinyl-aromatic monomer, said vinyl-aromatic copolymer having been obtained by graft copolymerization of said ethylenically unsaturated nitrile and said vinyl-aromatic monomer on said olefinic elastomer;
(B) polyamide resin in an amount such that the weight ratio of impact-resistant vinyl-aromatic copolymer (A) to polyamide resin is from 80:20 to 20:80;
(C) from 0.01 to 20% by weight, with respect to the blend of (A) and (B), of compatibilizing copolymer comprising
   (i) a vinyl-aromatic monomer, of the kind used in component (A);
   (ii) a comonomer selected from acrylonitrile, methacrylonitrile, C₁₋₄ alkyl methacrylate, C₁₋₄ alkyl acrylate and mixtures of these monomers, in a weight ratio of vinyl-aromatic monomer to comonomer of from 85:15 to 15:85; and
   (iii) from 0.01 to 4 mole-%, based on the total monomers which make up said copolymer, of a copolymerized comonomer selected from acrylic acid, methacrylic acid, dicarboxylic acids, dicarboxylic acid anhydrides and C₁₋₁₂ mono-alkyl esters of dicarboxylic acids;
(D) from 1 to 5% by weight, with respect to the blend of (A) and (B), of polyolefin selected from polyethylene, polypropylene and ethylene-propylene copolymers having an ethylene content of from 75 to 98% by weight and a propylene content of from 25 to 2% by weight.

The weight ratio of vinyl-aromatic copolymer and polyamide resin (A/B) preferably ranges from 70:30 to 30:70 and the amount of compatibilizing copolymer (C) preferably is from 1 to 10 % by weight with respect to the blend of (A) and (B).

Component (A) of the thermoplastic compositions of the present invention is an impact-resistant vinyl-aromatic copolymer which preferably contains from 25 to 35 % by weight of ethylenically unsaturated nitrile, from 20 to 40% by weight of olefinic elastomer and from 25 to 55% by weight of vinyl-aromatic monomer.

The olefinic elastomeric component, which is the support on which ethylenically unsaturated nitrile and vinyl-aromatic monomer are partly grafted and partly mechanically attached in the form of a copolymer of ethylenically unsaturated nitrile and vinyl-aromatic monomer, preferably is a rubbery copolymer, having a Mooney viscosity (ML-4) of from 10 to 150 at 100°C, of at least two different linear (preferably C₁₋₈) alpha-mono-olefins (such as ethylene, propylene, butene-1, octene-1 etc.) and at least one other copolymerizable monomer, i.e., a polyene and typically a non-conjugated diene. Preferably one of the alpha-mono-olefins is ethylene. The weight ratio of ethylene and the at least one other alpha-mono-olefin in the rubbery copolymer usually is in the range of from 20:80 to 80:20. Particularly preferred copolymers are ethylene-propylene-non-conjugated diene terpolymers, in which the non-conjugated diene can be cyclic or noncyclic such as: 5-methylene-2-norbornene; 5-ethylidene-2-norbornene; 5-isoproylene-2-norbornene; pentadiene-1,4; hexadiene-1,4; hexadiene-1,5; heptadiene-1,5; dodecatriene-1,7,9; methyl-heptadiene-1,5; norbornadiene-2,5; cyclo-octadiene-1,5; dicyclopentadiene; tetrahydroindene; 5-methyl-tetrahydroindene, etc. The diene content of the rubbery terpolymer generally is between 5 and 20 % by weight, and preferably between 8 and 18 % by weight of dienic monomeric units.

Particularly interesting results may be obtained by using a rubbery terpolymer having a Mooney viscosity (ML-4), measured at 100°C, between 30 and 90 and a iodine number above 5, preferably between 10 and 40.

The term "vinyl-aromatic monomer", as used in the present description and in the appended claims, preferably denotes ethylenically unsaturated compounds having the general formula (I): 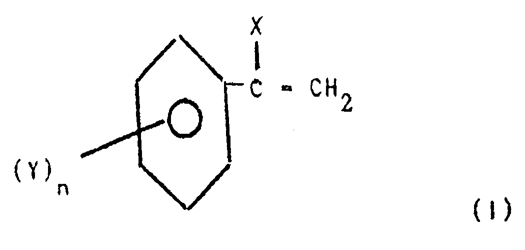
in which:
- X: represents hydrogen or an alkyl radical having from 1 to 4 carbon atoms (e.g. methyl and ethyl);
- Y: represents halogen (e.g. F, Cl, Br and I) or an alkyl radical having from 1 to 4 carbon atoms and
- n: is 0 or an integer of from 1 to 5, e.g. 1 or 2.

Examples of vinyl-aromatic monomers having the above general formula are styrene; methyl-styrene; mono-, di-, tri-, tetra-and penta-chloro-styrene and the corresponding alpha-methyl-styrenes; styrenes alkylated in the nucleus and the corresponding alpha-methyl-styrenes, such as ortho- and para-methyl-styrenes; ortho- and para-ethyl-styrenes; ortho- and para-methyl-alpha-methyl-styrenes, etc.

These monomers can be used individually or as combination of two or more thereof. The term "ethylenically unsaturated nitrile" includes first of all and preferably acrylonitrile, although other acrylic monomers such as methacrylonitrile, acrylic acid, methacrylic acid and C₁₋₄ alkyl esters of acrylic and methacrylic acid can also be used.

Examples of copolymerization methods for obtaining impact-resistant styrenic copolymers suitable for use in the compositions of the present invention are described, e.g., in IT-B-792,269 and in US-A-3,819,765, 3,489,822, 3,642,950 and 3,849,518.

It is apparent that in the grafting copolymerization not all of the monomers forming the resin are grafted onto the rubbery substrate; a part of the monomers forms a free resin that is present in physical mixture with the grafted copolymer. The quantity of monomers grafted onto the copolymer can be determined by extraction of the product with a solvent for the non-grafted resin.

Component (A) typically is an AES resin that is an EPDM rubber onto which the styrene-acrylonitrile copolymer (SAN) is partly grafted and partly mechanically attached.

Polyamide resins (component B) suitable for use in the present invention are the conventional ones, injection moldable, generally known as nylon resins, including the aliphatic polylactams obtained by opening the lactam rings, and the polyamides produced by polycondensation of an aliphatic diamine containing from 4 to 14 carbon atoms with an aliphatic dicarboxylic acid containing from 4 to 12 carbon atoms. Examples of suitable polyamide resins are nylon 4; nylon 6; nylon 7; nylon 11; nylon 12; nylon 6,6; nylon 6,9; nylon 6,10; nylon 6,12, etc. Partly aromatic nylons can also be used as component (B) in the compositions of the present invention. The term "partly aromatic nylons" denotes nylons obtained by partial or complete substitution of an aliphatic residue of an aliphatic nylon by an aromatic residue.

For example, the residues of adipic acid in nylon 6,6 can be substituted by terephthalic or isophthalic acid residues or by mixtures thereof. Similarly, some amine residues may be of aromatic nature.

Preferred polyamide resins are nylon 6, nylon 6,6 and random copolymers of nylon 6 and nylon 6,6.

The average molecular weight of the polyamide resins is advantageously above 10,000 and preferably above 15,000, and the melting point is preferably above 200°C.

Component (C), used to render the impact-resistant vinyl-aromatic copolymer (A) compatible with the polyamide resin (B), preferably is a copolymer of a vinyl-aromatic monomer, of the kind used in component (A), copolymerized with acrylonitrile, methacrylonitrile, C₁₋₄ alkyl methacrylate, C₁₋₄ alkyl acrylate or a mixture of these two monomers in a weight ratio of vinyl-aromatic monomer/comonomer of from 85:15 to 15:85.

The compatibilizing copolymer contains from 0.01 to 4, and preferably from 0.1 to 3 mole-%, based on the total monomers which make up said copolymer, of a specific copolymerized comonomer containing a functional group which reacts with the amine or with the carboxylic acid groups of the polyamide. Generally the concentration of the comonomer containing the functional group is such as to provide 1 to 20 functional groups per molecule of component (C).

The comonomers containing said functional groups are acrylic and methacrylic acid, C₁₋₁₂ monoalkyl esters of dicarboxylic acids (such as monomethyl-maleate, mono-dodecyl fumarate, etc.); dicarboxylic acids such as fumaric acid, maleic acid, itaconic acid, aconitic acid, citraconic acid etc. and the corresponding anhydrides.

The average molecular weight of the copolymers (C) is generally above 20,000 and preferably ranges from 40,000 to 100,000.

The preferred component (C) is a terpolymer containing styrene, acrylonitrile, from 0.1 to 3, and preferably from 0.5 to 2 % by moles of maleic anhydride and, optionally, alpha-methyl-styrene. The weight ratio styrene/acrylonitrile is from 85/15 to 15/85 and preferably from 80/20 to 50/50.

The polyolefin, used as component (D) in the compositions of the present invention, is selected from polyethylene, polypropyleneand ethylene-propylene copolymers containing from 75 to 98 % by weight of ethylene and from 25 to 2 % of propylene.

The term "polyethylene" preferably denotes ethylene polymers having a density of from 0.90 to 0.97 g/cm³, e.g. those known as low density polyethylene (LDPE), linear low density polyethylene (LLDPE), and high density polyethylene (HDPE). These polymers are commercially available, for example, under the trade names ESCORENE® LL 1201 (LLDPE-EXXON) and RIBLENE® AK 1912 (LDPE-ENICHEM).

The compositions of the present invention can be prepared, e.g., by hot mixing in any known mixing unit, such as single or double screw extruders, Banbury mixers, mixing rollers, etc., at a temperature of from 200 to 300°C. The compositions may additionally contain stabilizing agents, UV stabilizers or other additives intimately incorporated therein, such as plasticizers, lubricants, flame retardant agents, flow agents, antistatics, dyes, pigments, glass fibres and/or inorganic fillers etc. in order to impart particular characteristics thereto.

The compositions of the present invention are easily processable and show a host of properties that make them suitable for use in the preparation of articles having both a high impact strength and a high thermal resistance as well as a reduced water sensitivity.

The present compositions may be applied, e.g., in the field of motor transportation, for the production of pieces that can be baked, parts that come into contact with the motor, electric household appliances, electronic and ingeneral technical articles having different forms such as cups, boxes, panels, sheets, rods, etc.

The compositions can also be used for the production of foamed articles, using known techniques.

The following examples are given to further illustrate the present invention without limiting same.

In the examples all parts and percentages are expressed by weight, unless otherwise indicated.

### EXAMPLES 1 to 4

By means of a double screw extruder (Baker-Perkins MPC V30), blends were extruded, with degasing and at a temperature of from 220° to 290°C. Said blends consisted of:
(A) a styrenic copolymer containing 20.7% of acrylonitrile, 48.3% of styrene and 31% of EPDM rubber having a Mooney viscosity (ML-4) of 62 to 72 at 100°C and a iodine number of 18;
(B) nylon 6 (TERNIL® B 27-Montedipe) having an average molecular weight of 18,000;
(C) a compatibilizing copolymer containing 1.8% of maleic anhydride, 29.5% of acrylonitrile and 68.7% of styrene;
(D) LLDPE polyethylene having a melt flow index (M.F.I) of 0.7 (ASTM D 1238), commercially known as ESCORENE® LL1201 (EXXON), or
(D') LDPE polyethylene having a M.F.I of 0.14 (ASTM D 1238), commercially known as RIBLENE® AK1912 (ENICHEM).

The weight ratios of the components of the blends are reported in Table 1.

By cutting the strands coming out of the extruder granules were obtained which were dried for 2 to 4 hours at 80 to 90°C. To evaluate their mechanical and thermal properties, the granules were injection molded at a temperature of 220 to 240°C on a Negri & Bossi V17 press to obtain test pieces having the dimensions required by the ASTM standards.

The measured characteristics and the methods employed were the following ones:

### Mechanical properties

The elongation at break in tensile tests and the elastic modulus were determined according to ASTM D638, and the notched IZOD impact strength at 23°C was determined according to ASTM D256, on test pieces having a thickness of 3.2 mm.

### Thermal properties

The VICAT A softening temperature (1 kg in oil) was determined according to ISO 306.

### Rheological properties

The Melt Flow Index (M.F.I.) was determined according to ASTM 1238, at 300°C and 1.2 kg.

The measured properties are reported in the following table 1.

**TABLE 1**

| COMPOSITIONS | EXAMPLES | | | |
|---|---|---|---|---|
| | 1* | 2* | 3 | 4 |
| (A) Impact resistant styrenic copolymer | 60 | 50 | 50 | 50 |
| (B) Nylon 6 | 35 | 45 | 42.5 | 42.5 |
| (C) Compatibilizing copolymer | 5 | 5 | 5 | 5 |
| (D) ESCORENE®LL1201 | - | - | 2.5 | - |
| (D')RIBLENE®AK1912 | - | - | - | 2.5 |

| PROPERTIES UNIT | | | | |
|---|---|---|---|---|
| IZOD J/m | 820 | 300 | 830 | 700 |
| Elastic modulus N/mm² | 1800 | 2000 | 1600 | 1700 |
| Elongation % | 93 | 93 | 160 | 150 |
| VICAT °C | 120 | 180 | 184 | 185 |
| M.F.I. g/10' | 15 | 14 | 13 | 17.5 |

| | | | | |
|---|---|---|---|---|
| * Comparative examples | | | | |

## Claims

1. Thermoplastic compositions, comprising a blend of:
(A) an impact-resistant vinyl-aromatic copolymer containing from 5 to 40% by weight of ethylenically unsaturated nitrile, from 15 to 50% by weight of olefinic elastomer formed from at least two different alpha-mono-olefins and a copolymerizable polyene monomer and from 10 to 80% by weight of vinyl-aromatic monomer, said vinyl-aromatic copolymer having been obtained by graft copolymerization of said ethylenically unsaturated nitrile and said vinyl-aromatic monomer on said olefinic elastomer;
(B) polyamide resin in an amount such that the weight ratio of impact-resistant vinyl-aromatic copolymer (A) to polyamide resin is from 80:20 to 20:80;
(C) from 0.01 to 20% by weight, with respect to the blend of (A) and (B), of compatibilizing copolymer comprising
(i) a vinyl-aromatic monomer, of the kind used in component (A);
(ii) a comonomer selected from acrylonitrile, methacrylonitrile, C₁₋₄ alkyl methacrylate, C₁₋₄ alkyl acrylate and mixtures of these monomers, in a weight ratio of vinyl-aromatic monomer to comonomer of from 85:15 to 15:85; and
(iii) from 0.01 to 4 mole-%, based on the total monomers which make up said copolymer, of a copolymerized comonomer selected from acrylic acid, methacrylic acid, dicarboxylic acids, dicarboxylic acid anhydrides and C₁₋₁₂ mono-alkyl esters of dicarboxylic acids;
(D) from 1 to 5% by weight, with respect to the blend of (A) and (B), of polyolefin selected from polyethylene, polypropylene and ethylene-propylene copolymers having an ethylene content of from 75 to 98% by weight and a propylene content of from 25 to 2% by weight.

2. Compositions according to claim 1, wherein the weight ratio of vinyl-aromatic copolymer to polyamide resin (A/B) is from 70:30 to 30:70 and the amount of compatibilizing copolymer (C) is from 1 to 10% by weight with respect to the blend of (A) and (B).

3. Compositions according to any one of claims 1 and 2, wherein the copolymer (A) contains from 25 to 35% by weight of ethylenically unsaturated nitrile, from 20 to 40% by weight of olefinic elastomer and from 25 to 55% by weight of vinyl-aromatic monomer.

4. Compositions according to any one of the preceding claims, wherein the olefinic elastomer is a rubbery copolymer, having a Mooney viscosity (ML-4) of from 10 to 150 at 100°C, of at least two different linear alpha-monoolefins and at least one copolymerizable non-conjugated diene.

5. Compositions according to claim 1, wherein one of the alpha-mono-olefins of the olefinic elastomer of component (A) is ethylene and the weight ratio of ethylene and the other alpha-mono-olefin(s) ranges form 20/80 to 80/20.

6. Compositions according to any one of the preceding claims, wherein the olefinic elastomer is an ethylene-propylene-non-conjugated diene terpolymer with a diene content of from 5 to 20% by weight.

7. Compositions according to claim 6, wherein the diene content of the olefinic elastomer is from 8 to 18% by weight.

8. Compositions according to any one of claims 6 and 7, wherein the terpolymer has a Mooney viscosity (ML-4), measured at 100°C, of from 30 to 90 and a iodine number above 5.

9. Compositions according to claim 8, wherein the iodine number of the terpolymer ranges from 10 to 40.

10. Compositions according to any one of the preceding claims, wherein the vinyl-aromatic monomer has the general formula (I): 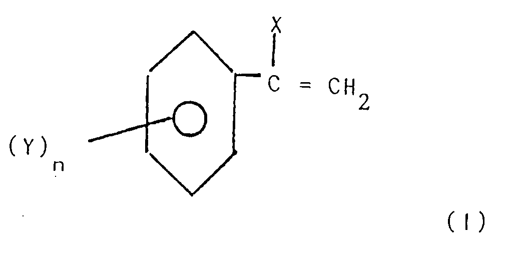 in which:
X represents hydrogen or an alkyl radical having from 1 to 4 carbon atoms;
Y represents halogen or an alkyl radical having from 1 to 4 carbon atoms, and
n is 0 or an integer of from 1 to 5.

11. Compositions according to any one of the preceding claims, wherein the ethylenically unsaturated nitrile comprises acrylonitrile.

12. Compositions according to any one of the preceding claims, wherein the polyamide resin comprises nylon 6.

13. Compositions according to any one of the preceding claims, wherein the compatibilizing copolymer (C) comprises from 0.1 to 3 mole-%, based on the total of monomers which make up said copolymer, of component (iii).

14. Compositions according to any one of the preceding claims, wherein the compatibilizing copolymer has an average molecular weight above 20,000.

15. Compositions according to claim 14, wherein the average molecular weight of the compatibilizing copolymer ranges from 40,000 to 100,000.

16. Compositions according to any one of the preceding claims, wherein the compatibilizing copolymer comprises a styrene-acrylonitrile-maleic anhydride terpolymer, wherein the maleic anhydride content is from 0.1 to 3.

17. Compositions according to claim 16, wherein the maleic anhydride content of the compatibilizing copolymer ranges from 0.5 to 2% by moles.

18. Compositions according to any one of claims 16 and 17, wherein the weight ratio styrene/acrylonitrile is from 80/20 to 50/50.

19. Compositions according to any one of the preceding claims, wherein the polyolefin is a polyethylene having a density of from 0.90 to 0.97 g/cm³.

20. Compositions according to any one of the preceding claims, additionally containing stabilizing agents, UV stabilizers, plasticizers, lubricants, flame retardant agents, flow agents, antistatics, dyes, pigments, glass fibres and/or inorganic fillers, said plasticizers and lubricants being different from component (D).

## Patentansprüche

1. Thermoplastische Zusammensetzungen, die eine Mischung umfassen von:
(A) einem schlagfesten vinylaromatischen Copolymer, das von 5 bis 40 Gew.-% an ethylenisch ungesättigtem Nitril, von 15 bis 50 Gew.-% an olefinischem Elastomer, gebildet aus wenigstens zwei verschiedenen α-Mono-Olefinen und einem copolymerisierbaren Polyen-Monomer, und von 10 bis 80 Gew.-% vinylaromatisches Monomer enthält, wobei das genannte vinylaromatische Copolymer durch Pfropf-Copolymerisation des genannten ethylenisch ungesättigten Nitrils und des genannten vinylaromatischen Monomers auf das genannte olefinische Elastomer erhalten wurde;
(B) Polyamid-Harz in einer solchen Menge, daß das Gewichtsverhältnis des schlagfesten vinylaromatischen Copolymers (A) zu dem Polyamid-Harz von 80:20 bis 20:80 beträgt;
(C) von 0,01 bis 20 Gew.-%, bezogen auf die Mischung von (A) und (B), eines Kompatibilität verleihenden Copolymers, das umfaßt:
(i) ein vinylaromatisches Monomer von der Art, wie es in der Komponente (A) verwendet wird;
(ii) ein Comonomer, ausgewählt aus Acrylnitril, Methacrylnitril, C₁₋₄-Alkylmethacrylat, C₁₋₄-Alkylacrylat und Mischungen dieser Monomere in einem Gewichtsverhältnis von vinylaromatischem Monomer zu Comonomer von 85:15 bis 15:85; und
(iii)von 0,01 bis 4 Mol-% (bezogen auf die gesamten Monomere, aus denen das genannte Copolymer besteht) eines copolymerisierten Comonomers, ausgewählt aus Arcylsäure, Methacrylsäure, Dicarbonsäuren, Dicarbonssäureanhydriden und C₁₋₁₂-Monoalkylestern der Dicarbonsäuren;
(D) von 1 bis 5 Gew.-%, bezogen auf die Mischung von (A) und (B) eines Polyolefins, ausgewählt aus Polyethylen, Polypropylen und Ethylen-Propylen-Copolymeren mit einem Ethylengehalt von 75 bis 98 Gew.-% und einem Propylengehalt von 25 bis 2 Gew.-%.

2. Zusammensetzungen nach Anspruch 1, worin das Gewichtsverhältnis des vinylaromatischen Copolymers zu Polyamidharz (A/B) von 70:30 bis 30:70 beträgt und die Menge an Kompatibilität verleihendem Copolymer (C) von 1 bis 10 Gew.-%, bezogen auf die Mischung von (A) und (B) beträgt.

3. Zusammensetzungen nach einem der Ansprüche 1 und 2, worin das Copolymer (A) von 25 bis 35 Gew.-% ethylenisch ungesättigtes Nitril, von 20 bis 40 Gew.-% olefinisches Elastomer und von 25 bis 55 Gew.-% vinylaromatisches Monomer enthält.

4. Zusammensetzungen nach einem der vorhergehenden Ansprüche, worin das olefinische Elastomer ein kautschukartiges Copolymer (mit einer Mooney-Viskosität (ML-4) von 10 bis 150 bei 100° C) von wenigstens zwei verschiedenen linearen α-Mono-Olefinen und wenigstens einem copolymerisierbaren nichtkonjugiertem Dien ist.

5. Zusammensetzungen nach Anspruch 1, worin eines der α-Mono-Olefine des olefinischen Elastomers der Komponente (A) Ethylen ist und das Gewichtsverhältnis von Ethylen und der (des) anderen α-Mono-Olefine(s) von 20/80 bis 80/20 beträgt.

6. Zusammensetzungen nach einem der vorhergehenden Ansprüche, worin das olefinische Elastomer ein Ethylen-Propylennicht konjugiertes Dien-Terpolymer mit einem Diengehalt von 5 bis 20 Gew.-% ist.

7. Zusammensetzungen nach Anspruch 6, worin der Diengehalt des olefinischen Elastomes von 8 bis 18 Gew.-% beträgt.

8. Zusammensetzungen nach einem der Ansprüche 6 und 7, worin das Terpolymer eine Mooney-Viskosität (ML-4), bestimmt bei 100° C, von 30 bis 90 und eine Jodzahl von mehr als 5 aufweist.

9. Zusammensetzungen nach Anspruch 8, worin die Jodzahl des Terpolymers von 10 bis 40 beträgt.

10. Zusammensetzungen nach einem der vorhergehenden Ansprüche, worin das vinylaromatische Monomer die allgemeine Formel (I) hat: 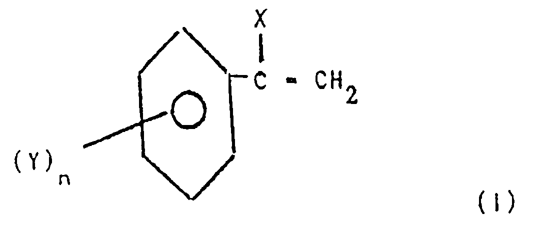 worin:
X ein Wasserstoffatom oder eine Alkylgruppe mit 1 bis 4 Kohlenstoffatomen bedeutet;
Y Halogen oder eine Alkylgruppe mit 1 bis 4 Kohlenstoffatomen ist und
n 0 oder eine ganze Zahl von 1 bis 5 bedeutet.

11. Zusammensetzungen nach einem der vorhergehenden Ansprüche, worin das ethylenisch ungesättigte Nitril Acrylnitril umfaßt.

12. Zusammensetzungen nach einem der vorhergehenden Ansprüche, worin das Polyamidharz Nylon 6 umfaßt.

13. Zusammensetzungen nach einem der vorhergehenden Ansprüche, worin das Kompatibilität verleihende Copolymer (C) von 0,1 bis 3 Mol-% (bezogen auf die gesamten Monomere, die das genannte Copolymer bilden) der Komponente (iii) umfaßt.

14. Zusammensetzungen nach einem der vorhergehenden Ansprüche, worin das Kompatibilität verleihende Copolymer ein durchschnittliches Molekulargewicht von über 20.000 aufweist.

15. Zusammensetzungen nach Anspruch 14, worin das durchschnittliche Molekulargewicht des Kompatibilität verleihenden Copolymers von 40.000 bis 100.000 beträgt.

16. Zusammensetzungen nach einem der vorhergehenden Ansprüche, worin das Kompatibilität verleihende Copolymer ein Styrol-Acrylnitril-Maleinsäureanhydrid-Terpolymer umfaßt, worin der Maleinsäureanhydrid-Gehalt von 0,1 bis 3 beträgt.

17. Zusammensetzungen nach Anspruch 16, worin der Maleinsäureanhydrid-Gehalt des Kompatibilität verleihenden Copolymers von 0,5 bis 2 Mol-% beträgt.

18. Zusammensetzungen nach einem der Ansprüche 16 und 17, worin das Gewichtsverhältnis von Styrol/Acrylnitril von 80/20 bis 50/50 beträgt.

19. Zusammensetzungen nach einem der vorhergehenden Ansprüche, worin das Polyolefin ein Polyethylen mit einer Dichte von 0,90 bis 0,97 g/cm³ ist.

20. Zusammensetzungen nach einem der vorhergehenden Ansprüche, die zusätzlich Stabilisierungsmittel, UV-Stabilisatoren, Weichmacher, Gleitmittel, flammhemmende Mittel, Fließverbesserer, antistatische Mittel, Farbstoffe, Pigmente, Glasfasern und/oder anorganische Füllmittel enthalten, wobei sich die genannten Weichmacher und Gleitmittel von der Komponente (D) unterscheiden.

## Revendications

1. Compositions thermoplastiques comprenant un mélange de :
(A) un copolymère vinylaromatique résistant aux chocs, contenant de 5 à 40 % en poids de nitrile éthyléniquement insaturé, de 15 à 50 % en poids d'élastomère oléfinique, formé à partir d'au moins deux alpha-mono-oléfines différentes et d'un monomère polyène copolymérisable, et de 10 à 80 % en poids de monomère vinylaromatique, ledit copolymère vinylaromatique ayant été obtenu par copolymérisation avec greffage dudit nitrile éthyléniquement insaturé et dudit monomère vinylaromatique sur ledit élastomère oléfinique,
(B) une résine de polyamide, présente en une quantité telle que le rapport en poids du copolymère vinylaromatique résistant aux chocs (A) à la résine de polyamide est compris entre 80:20 et 20:80,
(C) 0,01 à 20 % en poids, par rapport au poids du mélange de (A) et (B), de copolymère favorisant la compatibilité, comprenant :
(i) un monomère vinylaromatique, du type utilisé pour le constituant (A),
(ii) un comonomère choisi parmi l'acrylonitrile, le méthacrylonitrile, les méthacrylates d'alkyle (C₁ à C₄), les acrylates d'alkyle (C₁ à C₄) et les mélanges de ces monomères, ledit comonomère étant présent en une quantité telle que le rapport en poids du monomère vinylaromatique au comonomère est compris entre 85:15 et 15:85, et
(iii) 0,01 à 4 % en moles, par rapport à la totalité des monomères qui constituent ledit copolymère, d'un comonomère copolymérisé, choisi parmi l'acide acrylique, l'acide méthacrylique, les acides dicarboxyliques, les anhydrides d'acides dicarboxyliques, et les monoesters d'alkyle(C₁ à C₁₂) d'acides dicarboxyliques,
(D) 1 à 5 % en poids, par rapport au poids du mélange de (A) et (B), d'une polyoléfine choisie parmi le polyéthylène, le polypropylène et les copolymères éthylènepropylène ayant une teneur en éthylène de 75 à 98 % en poids et une teneur en propylène de 25 à 2 % en poids.

2. Compositions selon la revendication 1, pour lesquelles le rapport en poids du copolymère vinylaromatique à la résine de polyamide (A/B) est compris entre 70:30 et 30:70 et la proportion de copolymère (C) favorisant la compatibilité représente 1 à 10 % en poids par rapport au poids du mélange de (A) et (B).

3. Compositions selon la revendication 1 ou 2, pour lesquelles le copolymère (A) contient 25 à 35 % en poids de nitrile éthyléniquement insaturé, 20 à 40 % en poids d'élastomère oléfinique et 25 à 55 % en poids de monomère vinylaromatique.

4. Compositions selon l'une quelconque des revendications précédentes, pour lesquelles l'élastomère oléfinique est un copolymère caoutchouteux, ayant une viscosité Mooney (ML-4) de 10 à 150 à 100°C, d'au moins deux alpha-mono-oléfines linéaires différentes et d'au moins un diène non-conjugué copolymérisable.

5. Compositions selon la revendication 1, pour lesquelles l'une des alpha-mono-oléfines de l'élastomère oléfinique du constituant (A) est l'éthylène et le rapport en poids de l'éthylène à l'autre ou aux autres alpha-monooléfines est compris dans l'intervalle allant de 20/80 à 80/20.

6. Compositions selon l'une quelconque des revendications précédentes, pour lesquelles l'élastomère oléfinique est un terpolymère éthylène-propylène-diène nonconjugué, ayant une teneur en diène de 5 à 20 % en poids.

7. Compositions selon la revendication 6, pour lesquelles la teneur en diène de l'élastomère oléfinique est comprise entre 8 et 18 % en poids.

8. Compositions selon l'une quelconque des revendications 6 et 7, pour lesquelles le terpolymère présente une viscosité Mooney (ML-4), mesurée à 100°C, de 30 à 90 et un indice d'iode supérieur à 5.

9. Compositions selon la revendication 8, pour lesquelles l'indice d'iode du terpolymère est compris dans l'intervalle allant de 10 à 40.

10. Compositions selon l'une quelconque des revendications précédentes, pour lesquelles le monomère vinylaromatique répond à la formule générale (I) : 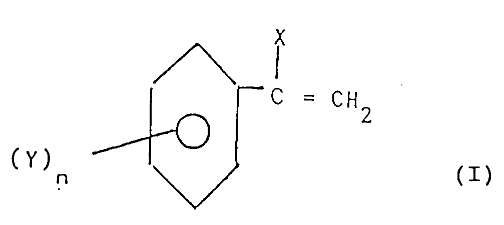 dans laquelle X représente un atome d'hydrogène ou un groupe alkyle ayant 1 à 4 atomes de carbone, Y représente un atome d'halogène ou un groupe alkyle ayant 1 à 4 atomes de carbone, et n est égal à 0 ou représente un nombre entier de 1 à 5.

11. Compositions selon l'une quelconque des revendications précédentes, pour lesquelles le nitrile éthyléniquement insaturé comprend de l'acrylonitrile.

12. Compositions selon l'une quelconque des revendications précédentes, pour lesquelles la résine de polyamide comprend du Nylon 6.

13. Compositions selon l'une quelconque des revendications précédentes, pour lesquelles le copolymère (C) favorisant la compatibilité renferme de 0,1 à 3 % en moles de constituant (iii) par rapport à la totalité des monomères qui constituent ledit copolymère.

14. Compositions selon l'une quelconque des revendications précédentes, pour lesquelles le copolymère favorisant la compatibilité présente une masse moléculaire moyenne supérieure à 20.000.

15. Compositions selon la revendication 14, pour lesquelles la masse moléculaire moyenne du copolymère favorisant la compatibilité est comprise dans l'intervalle allant de 40.000 à 100.000.

16. Compositions selon l'une quelconque des revendications précédentes, pour lesquelles le copolymère favorisant la compatibilité comprend un terpolymère styrène-acrylonitrile-anhydride maléique, dont la teneur en anhydride maléique est comprise entre 0,1 et 3 % en moles.

17. Compositions selon la revendication 16, pour lesquelles la teneur en anhydride maléique du copolymère favorisant la compatibilité est comprise dans l'intervalle allant de 0,5 à 2 % en moles.

18. Compositions selon l'une quelconque des revendications 16 et 17, pour lesquelles le rapport en poids styrène/acrylonitrile est compris entre 80/20 et 50/50.

19. Compositions selon l'une quelconque des revendications précédentes, pour lesquelles la polyoléfine est un polyéthylène ayant une masse volumique de 0,90 à 0,97 g/cm³.

20. Compositions selon l'une quelconque des revendications précédentes, contenant en outre des agents stabilisants, des stabilisants vis-à-vis de l'action des rayons UV, des plastifiants, des lubrifiants, des agents retardant l'inflammation, des agents pour l'écoulement, des agents antistatiques, des colorants, des pigments, des fibres de verre et/ou des charges minérales, lesdits plastifiants et lubrifiants étant différents du constituant (D).
